# EUROPEAN PATENT SPECIFICATION

(11) **EP 4 204 895 B1**
(45) Date of publication and mention of the grant of the patent: **28.10.2026**
(21) Application number: 22834076.6
(22) Date of filing: 28.06.2022
(51) Int. Cl.: G02B 27/01, G02B 26/10

(54) **OPTIC SYSTEM FOR HEAD WEARABLE DEVICES**
OPTISCHES SYSTEM FÜR AM KOPF TRAGBARE VORRICHTUNGEN
SYSTÈME OPTIQUE POUR DISPOSITIFS À PORTER SUR LA TÊTE

(30) Priority: 29.06.2021 US 202163215995 P; 01.04.2022 US 202263326281 P
(43) Date of publication of application: 05.07.2023
(73) Proprietor: Oomii Inc., Grand Cayman KY1-1208 (KY)
(72) Inventor: CHENG, Ken-yu, Taichung City, 436035 (TW); CHEN, Guo-hsuan, Taichung City, 411 (TW); YEH, Feng-chun, Taipei City, 116 (TW)
(74) Representative: Michalski Hüttermann & Partner mbB
(86) International application number: PCT/US2022/035337
(87) International publication number: WO 2023/278465

(56) References cited:
- EP-B1- 0 744 643
- WO-A1-2021/092314
- US-A- 5 477 394
- US-A1- 2007 285 793
- US-A1- 2014 266 987
- US-A1- 2019 121 132
- US-A1- 2020 209 629
- US-A1- 2020 393 677

## Description

### BACKGROUND OF THE INVENTION

### Field of the Invention

The present invention relates to optic system for head wearable display devices; more particularly, image display system for correcting image distortion and chromatic aberration for head wearable display devices. The present invention further relates to system for improving eye-relief, field of view, and form factor for head wearable display devices.

### Description of Related Art

For head wearable devices that implement waveguide for transmitting light from the light sources to display images, there is no image correction mechanism while it suffers image distortion due to light scattering in the course of transmission via the waveguide. As for head wearable devices implementing retinal scanning display, they rely on optical combiners for directing light emitted by the light emitter into the viewer's eyes. The curvature of the surface of the optical combiners is modified for controlling the direction of the light so that light can be focused and render images for the viewer. However, the geometry of the surface of the optical combiner directly affects the final shape of the image frame produced. As an example, in some instances, it may be preferred to have rectangular shaped image frame for displaying virtual image. However, the shape of the image frame is often not perfectly rectangular shaped (i.e., distorted). In conventional art, the shape of the image frame may be modified digitally; however, this may require additional system of circuitry to perform such task, which can increase the overall hardware volume of the head wearable device. Furthermore, digital distortion correction oftentimes implements frame trimming which removes small portions of the image frame (particularly the distorted portion) to obtain the proper shape of the image frame; however, this may result undesirable resolution or image information lost. In addition, the "eye relief" of an optical instrument refers to the distance from the eye of the viewer to the closest eyepiece or optical element of the optical instrument. This distance directly affects form factor of the head wearable device, as well as the maximum field of view and image quality that can be perceived by the viewer. The eye relief in the conventional head wearable devices are often much larger than that of the conventional eyeglasses, which causes the conventional eyeglasses to be bulky. Furthermore, the field of view in the conventional head wearable devices are often insufficient for higher quality image rendering. Therefore, a new optical system for head wearable devices with enhancing form factor which can retain the desirable shape of the image frame is desirable.

EP 0 744 643 B1 describes a head-up display apparatus for observing an image displayed on image display means as an enlarged virtual image. US 2020/209629 A1 describes an image projection device for a head wearable display in which a light source and a scan unit emit a scanning light onto a retina of a viewer. The projection unit comprises a first optical system and a second optical system, each including a plurality of curved reflection mirrors, the first optical system converging the scanning light on a first virtual plane located outside the eye of the viewer and the second optical system converging the scanning light that has passed through the first virtual plane on a second virtual plane located near a pupil of the viewer, the optical path lengths of the scanning light being substantially equalised.

### SUMMARY

The invention is defined by the features of the independent claim.

The optic system for head wearable devices (HWDs) in accordance with an embodiment of the present invention comprises a first light emitter, a first light redirector, a second light redirector, and a third light redirector. The first light emitter is configured for emitting a plurality of first light signals. The direction of projection is varied in at least one dimension. The first light redirector, the second light redirector, and the third light redirector receive the plurality of first light signals and change the direction of each of the plurality of first light signals. The first light redirector receives the plurality of first light signals and directs the plurality of first light signals toward the third light redirector, the third light redirector directs the plurality of first light signals received from the first light redirector toward the second light redirector, the second light redirector directs the plurality of first light signals received from the third light redirector toward an eye of a viewer, so the viewer perceives an image frame.

In some embodiments, the first light redirector and the second light redirector may respectively have at least one focus. The first light redirector or the second light redirector may have two or more than two foci.

Each of the of the plurality of first light signals has a different optical path. A total optical path length from the first light emitter to the eye of the viewer of a first light signal of the plurality of first light signals not being emitted in proximity to the first spatial dimension limit or the second spatial dimension limit is substantially equal to the total optical path length of the light signal emitted by the first light emitter in proximity to the first spatial dimension limit and the second spatial dimension limit.

In an embodiment of the present invention, the third light redirector is located in proximity to (or nearly at) a first focus of the first light redirector and a first focus of the second light redirector. The first light redirector receives the plurality of first light signals emitted from the first light emitter and directs all the first light signals towards the first focus of the first light redirector where the plurality of first light signals having different optical paths is focused. The light emitter may be provided in proximity to the second focus of the first light redirector. In this configuration, the magnitude of the change in the direction of projection can be maximize and ensuring all the light signals can be received by the first light redirector. The eye of the viewer is located in proximity to (or nearly at) a second focus of the second light redirector.

The following configuration is not according to the claimed invention but is retained for understanding: the first light redirector comprises two foci located on the same side of the first light redirector. The third light redirector is located in proximity to the first focus of the first light redirector and the first focus of the second light redirector. The first light emitter may be located in proximity to a second focus of the first light redirector. In some variations of the present invention, the second light redirector comprises two foci located in a space between the second light redirector and the eye of the viewer. The eye of the viewer is located in proximity to a second focus of the second light redirector. The advantageous of having such configuration are readily describe previously.

In an alternative embodiment of the present invention, the optic system for head wearable devices comprises the first light emitter, the first light redirector, and the second light redirector. The third light redirector from the previous embodiment is omitted in this embodiment. The first light redirector receives the plurality of first light signals and changes a direction of each of the plurality of first light signals. The second light redirector directs the plurality of first light signals received from the first light redirector toward an eye of a viewer, so the viewer perceives the image frame. The first light redirector and the second light redirector is positioned such that the first focus of the first light redirector and the first focus of the second light redirector are at a same spatial location. The first light redirector can be position at a vertical position higher than the second light redirector. In this embodiment, the geometry of the first light redirector is also configured so that a light signal emitted by the first light emitter in proximity to the first spatial dimension limit has a total optical path length from the first light emitter to the eye of the viewer substantially equal to a total optical path length of another light signal emitted by the first light emitter in proximity to the second spatial dimension limit from the first light emitter to the eye of the viewer.

In another alternative embodiment of the present invention, the optic system for HWDs comprises a first light emitter, a combiner, and a correction assembly. The correction assembly may comprise a first transitional mirror, a second transitional mirror, and a first parabolic reflector. Both the first transitional mirror and the second transitional mirror are located in between the first parabolic reflector and the combiner. The combiner may be a parabolic reflector. The light signals produced by the first light emitter is initially reflected by the first parabolic reflector of the correction assembly to the transitional mirror. In some embodiment, a third transitional mirror may be provided between the first transitional mirror and the first transitional mirror for increasing the optical path length of the light. The first parabolic reflector is meant to provide a complimentary light profile to the combiner. The light signals between the first transitional mirror and the second transitional mirror are also parallel with each other. This is advantages because the optical path length in between the first transitional mirror and the second transitional mirror can be adjust as desired based on form factor.

The optic system for HWDs according to the present invention can further comprise a second light emitter for emitting a plurality of second light signals. Each of the plurality of first light signals and the corresponding second light signal can be perceived by the eyes of the viewer to form a binocular light signal via fusion of human vision; the viewer can only perceive on single binocular light signal composed of a single first light signal and the corresponding second light signal. The optic system further comprises a fourth light redirector, and a fifth light redirector for receiving the plurality of second light signals and changing a direction of each of the plurality of second light signals. Similar to the first and second light redirectors, the fourth light redirector receives the plurality of second light signals and directs the plurality of second light signals toward the fifth light redirector, the fifth light redirector directs the plurality of second light signals received from the fourth light redirector toward an another eye of the viewer such that the plurality of second light signals is projected toward an another retina of the viewer. A first virtual image composed of the plurality of first light signals is perceived by the viewer as on a side of the second light redirector opposite to a side where the eye of the viewer is located; similarly, another virtual image composed of the plurality of second light signals is perceived by the viewer as on a side of the fifth light redirector opposite to a side where the eye of the viewer is located. The optic system may further comprise a sixth light redirector for receiving the plurality of second light signals and changing a direction of each of the plurality of second light signals. In this case, the fourth light redirector receives the plurality of second light signals and directs the plurality of second light signals toward the sixth light redirector, the sixth light redirector directs the plurality of second light signals received from the fourth light redirector toward the fifth light redirector, the fifth light redirector directs the plurality of second light signals received from the sixth light redirector toward the another eye of the viewer. In the present embodiment, the fourth light redirector is equivalent to the first light redirector; the fifth light redirector is equivalent to the second light redirector; and the third light redirector is equivalent to the sixth light redirector.

In one embodiment, the viewer perceives a binocular virtual image form by fusion of the first virtual image and the second virtual image. The depth perception of the binocular virtual image is controlled by adjusting an angle of convergence formed between the optical path extension of the first light signal and the optical path extension of the second light signals. The direction of the optical path extension of the first light signal and the second light signal can be varied by controlling a direction of projection (which is regulated by e.g., a MEMS mirror within the light emitter) of the first light emitter and the second light emitter. This method for creating depth perception of the virtual image is consistent with natural vision of the human eyes because human brain determines a depth of an object in 3-dimensional space at least in part based on the angle of fixation of the eye, which is directly related to the angle of convergence formed between the optical path extension of the first light signal and the optical path extension of the second light signal. In some embodiments of the present invention, the right light signal and the corresponding left light signal for a virtual binocular pixel display an image of the same view angle.

With the design of the present embodiment, a FOV of approximately 60 degrees in the horizontal direction can be achieved. Furthermore, the FOV in the vertical direction on left side of the image frame is approximately the same as the FOV in the vertical direction on the right side of the image frame (1: 1 ratio). The FOV in the horizontal direction on the top of the image frame is also similar to that of the bottom of the image frame.

### BRIEF DESCRIPTION OF THE DRAWINGS

FIG.1 illustrates the background knowledge related to the present invention.
FIG.2 illustrates the background knowledge related to the present invention.
FIG.3 illustrates the background knowledge related to the present invention.
FIG. 4 is a schematic diagram illustrating an embodiment of the present invention.
FIG. 5 is another schematic diagram illustrating an embodiment of the present invention.
FIG. 6A is a schematic diagram for explaining how to reduce distortion and increase FOV of an image frame according to an embodiment of the present invention.
FIG. 6B is another schematic diagram for explaining how to reduce distortion and increase FOV of an image frame according to an embodiment of the present invention.
FIG. 6C is another schematic diagram for explaining how to reduce distortion and increase FOV of an image frame according to an embodiment of the present invention.
FIG. 7 explain the concept of optical path length difference amount different light signals according to an embodiment of the present invention.
FIG. 8 is a schematic diagram illustrating an embodiment not according to the claimed invention.
FIG. 9 is a schematic diagram illustrating an embodiment not according to the claimed invention.
FIG. 10 is a schematic diagram illustrating an embodiment not according to the claimed invention.
FIG. 11A illustrates an image frame quality of a conventional art.
FIG. 11B illustrates an image frame quality of the present invention.
FIG. 12 is a schematic diagram illustrating an embodiment in which two sets of optical system are applied to both eyes of the viewer.
FIG.13 illustrates the method for rendering depth perception and three-dimensional effect according to the present invention.

### DETAILED DESCRIPTION OF PREFERRED EMBODIMENTS

The present invention is directly related to an improved optic system for augmented reality or virtual reality head wearable devices. The current augmented reality (AR) or virtual reality (VR) head wearable devices (HWD) oftentimes utilize spherical lenses or waveguide along with a display screen/panel for rendering virtual images. The current augmented AR/VR HWDs often have large eye relief (which is referred to the distance from the eye of the viewer to the closest eyepiece or optical element of the optical instrument); as a result, they suffer poor form factor and usability for daily usage. Unlike the current AR/VR HWDs, the present invention implements a novel way for rendering 3-dimensional image in 3-dimensional space with depth. As a result, the realization of an improved optic system with superior form factor and short eye relief is possible. In addition to these mentioned advantages, the present invention also creates large field of view (FOV) for the viewer, while suffering little image distortion. Since the FOV is drastically increased, the effective eyebox (which may be referring to a volume where the eye receives an acceptable view of the virtual image) is also expanded for the eye of the viewer; this is because with shorter eye relief, it is easier for the user to see the light signals projected by the light emitter of the HWD. The present invention may involve multiple non-spherical or freeform lenses/optical elements and direct retina scanning technology to direct light signals projected by the light emitter to the eye of the viewer.

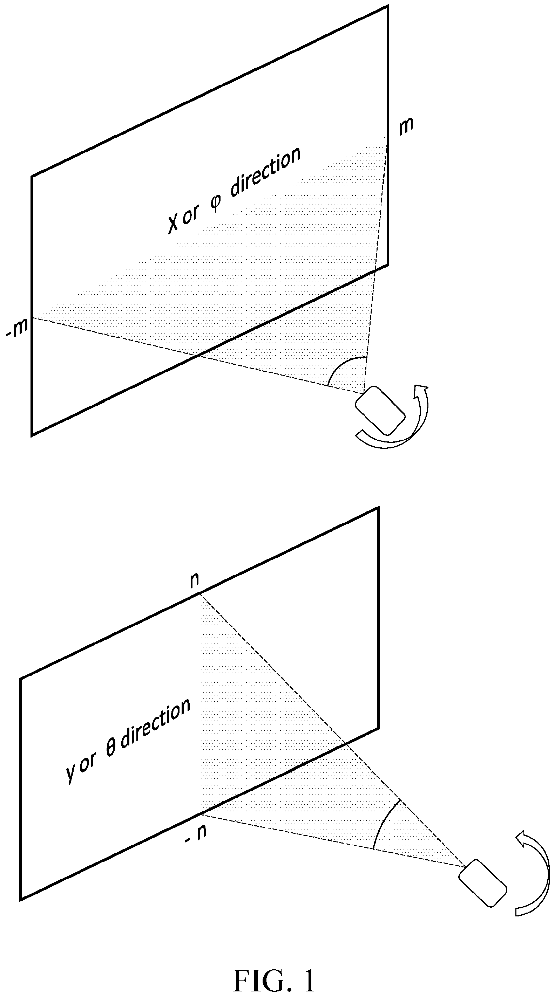

With reference to FIG. 1, the light emitter mentioned in the present invention may refer to any light emitting mechanism which varies the direction of projection in one spatial dimension (e.g., in x coordinate dimension or y coordinate dimension in the Cartesian coordinate system, or in θ coordinate dimension or φ coordinate dimension in the polar coordinate system), or two spatial dimensions (e.g., in both x coordinate dimension and y coordinate dimension in the Cartesian coordinate system, or in both φ coordinate dimension and θ coordinate dimension in the polar coordinate system) to produce an image frame by emitting a plurality of light signals which forms the pixels of the image frame (which is made possible by vision persistence of human eyes). As an example, the direction of projection may be altered by implementing micro electromechanical system (MEMS) based reflective system such as MEMS mirrors. Furthermore, it can be understood that there exist two spatial limits between which the light emitter can tum (or move linearly) while project a plurality of light signals to form a virtual image or virtual image frame. Specifically, suppose the image frame produced by the light emitter has a rectangular shape, the direction of projection of the light emitter is varied in two coordinate dimensions (i.e., in x and y coordinate dimensions or in φ and θ coordinate dimensions). For each of the two coordinate dimensions, there are two limits between which the direction of projection is varied. With reference to FIG. 1, as an example, the direction of projection of the light emitter is varied between -m and m, where -m and m are coordinates in φ direction (or x direction) in the polar coordinate system and both -m and m are considered as spatial dimension limits in φ direction (which is the limit that the light emitter can turn; it can be expressed in degree of angle). In another embodiment, the direction of projection of the light emitter is varied between -n and n, where -n and n are coordinates in y direction in the Cartesian coordinate system (or θ in the polar coordinate). In this case, -m and m, and -n and n are considered as spatial dimension limit. For example, -m or -n may be referred as the first spatial dimension limit; and m or n may be referred as the second spatial dimension limit.

A specific example for the light emitter described in the present invention may be laser beam scanning projector (LBS projector) which may comprise a red color light laser, a green color light laser, and a blue color light laser for producing different colors of light. Furthermore, for example, each of the image frame may contain 1280 x 720 pixels, which are composed of 1280 x 720 light signals. Other light emitters may also be possible for applying to the present invention.

The term "light redirector" in the present invention refers to any optical elements that are configured to change the direction which light travels after light encounters or incidents on the optical elements. For examples, light redirector can be any optical lens, mirror, reflector, refractor, elliptical lens/reflector, spherical lens/reflector, parabolic surface reflector, non-spherical lens/reflector, freeform optical lens/reflector, or meta-surface reflector... etc.

In the present invention, the phrase "substantially equal to" is used to discuss the optical path lengths of different light signals. It should be understood that when two optical path length are considered "substantially equal to", it means said two optical path length have a difference that is less than 5%. The phrase "in proximity to" refers to an object (i.e., any portions of the object) is configured to be as close to a position (or another object) as possible but may not be at the position due to measuring error, manufacturing error, allowable engineering tolerance, or any other types of physical limitations.

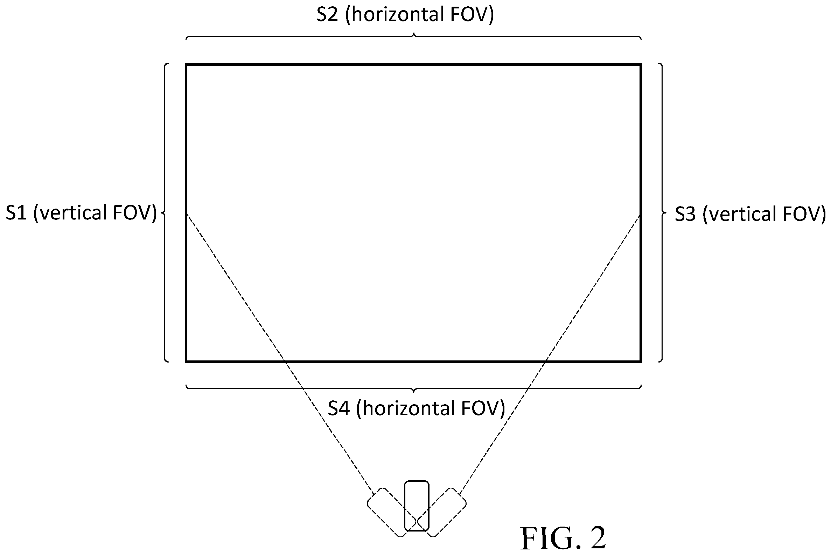

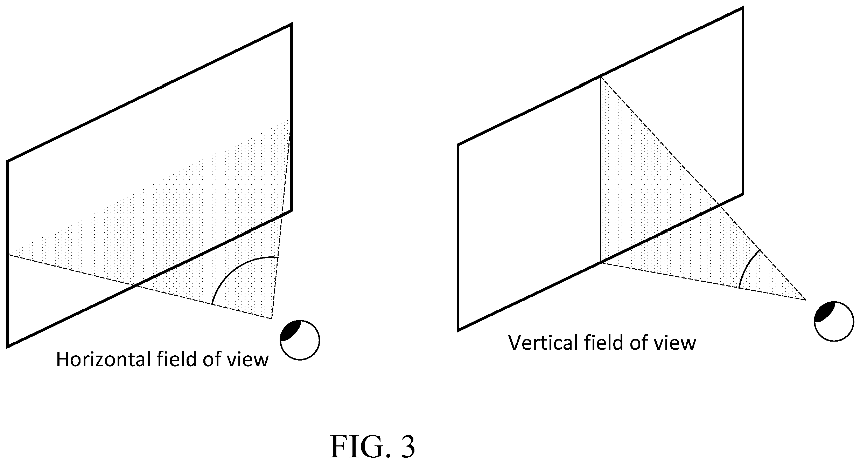

The image distortion mentioned herein refers to change in shape of the actual image frame received by the eye of the viewer relative to the intended/ideal shape of the image frame received by the eye of the viewer. In some instances, the image distortion may be referring to the change in shape of the actual image frame received by an optical element of the HWD relative to the intended/ideal shape of the image frame received by said optical element. Yet in another instance, the distortion of the image frame may be referring to the shift in the length of a side of the image frame relative to the other corresponding side of the image frame. As an example (with reference to FIG.2), in the case which the shape of the image frame is intended to have a quadrilateral shape, the image frame may have a first side s1, a second side s2, a third side s3, and a fourth side s4. The first side s1 and the third side s3 correspond to the left edge and the right edge of the image frame, and the first side s1 and the third side s3 are comprised of a same number of light signals (pixels; e.g., 760 pixels). The second side s2 and the fourth side s4 corresponds to the upper edge and lower edge of the image frame, and the second side s2 and the fourth side s4 are comprised of a same number of light signals (pixels; e.g., 1280 pixels). The first side s1 and the third side s3 should have the same length; and the second side s2 and the fourth side s4 should have the same length. In this case, the distortion of the image frame in a first dimension can be measured by calculating the ratio between the length of the first side s1 to the length of the third side s3. By the same token, the distortion of the image frame in a second dimension can be measured by calculating the ratio between the length of the second side s2 to the length of the fourth side s4. A ratio deviate from 1 means the distortion of the image frame in the first or second dimension is worsen. For convenience purpose, the lengths of the sides of the image frame are not measured with conventional length units (mm, and cm...etc.). The size of the sides of the image frame are expressed in terms of FOV, which is an angle and is expressed in degrees. More specifically, each of the edges of the image frame represent the spatial range in which the viewer can see the virtual image. Therefore, the lengths of the sides of the image frame are directly correlates to the vertical and horizontal FOV which the viewer can see(with reference to FIGS. 2 and 3).

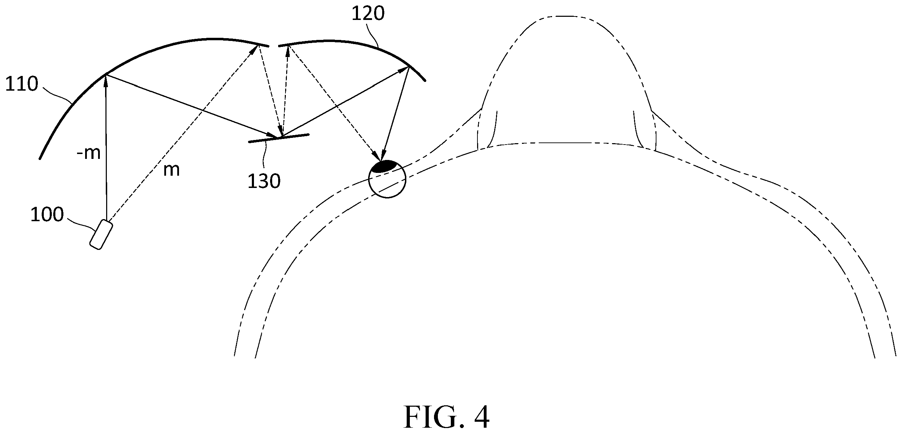

With reference to FIG. 4, it illustrates the optic system for HWDs in accordance with an embodiment of the present invention. For the purpose of simplicity, only one side of the optic system is shown. However, it should be understood that the present invention can be applied to one eye of the viewer or both eyes of the viewer. The optic system for HWDs comprises a first light emitter 100, a first light redirector 110, a second light redirector 120, and a third light redirector 130. The first light emitter 100 is configured for emitting a plurality of first light signals. As previously mentioned, the first light emitter 100 varies the direction of projection between a first spatial dimension limit and a second spatial dimension limit in a first dimension. The first dimension may be x coordinate dimension or y coordinate dimension in the Cartesian coordinate system, or θ coordinate dimension or φ coordinate dimension in the polar coordinate system. The direction of projection is varied in at least one dimension. When the direction of projection is varied in two dimensions, an image frame may be formed. As an example, the first spatial dimension limit and the second spatial dimension are respectively referring to -m and m, between which the first light emitter 100 emits the plurality of light signals. As an example, in some instances, when the direction of projection is varied in the x direction (e.g., horizontal direction), the light signals emitted in proximity to the first spatial dimension limit create the left edge of the image frame; and the light signals emitted in proximity to the second spatial dimension limit creates the right edge of the image frame. As an example, the first spatial dimension limit and the second spatial dimension are respectively referring to -n and n, between which the first light emitter 100 emits the plurality of light signals. As an example, in some other instances, when the direction of projection is varied in the y direction (e.g., vertical direction), the light signals emitted in proximity to the first spatial dimension limit create the upper edge of the image frame; and the light signals emitted in proximity to the second spatial dimension limit creates the lower edge of the image frame.

With reference to FIG. 4, the first light redirector 110, the second light redirector 120, and the third light redirector 130 receive the plurality of first light signals and change the direction of each of the plurality of first light signals. Each of the of the plurality of first light signals has a different optical path. The first light redirector 110 receives the plurality of first light signals and directs the plurality of first light signals toward the third light redirector 130, the third light redirector 130 directs the plurality of first light signals received from the first light redirector 110 toward the second light redirector 120, the second light redirector 120 directs the plurality of first light signals received from the third light redirector 130 toward an eye of a viewer, so the viewer perceives an image frame, which is composed of the plurality of first light signal (pixels). The first light redirector 110 and the second light redirector 120 may respectively have at least one focus. In other embodiments, the first light redirector 110 or the second light redirector 120 may have two or more than two foci.

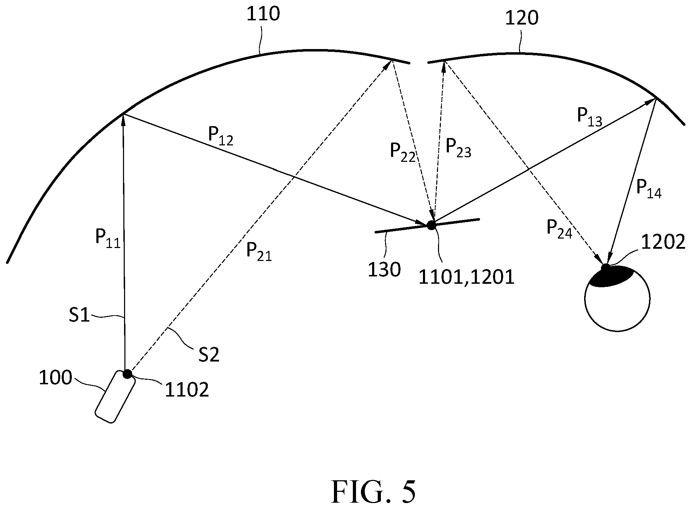

With reference to FIG.5, in an embodiment of the present invention, the third light redirector 130 is located in proximity to (or nearly at) a first focus of the first light redirector 1101 and a first focus of the second light redirector 1201 (the first focus of the first light redirector 1101 and a first focus of the second light redirector 1201 are at the same spatial location). The first light redirector 110 receives the plurality of first light signals emitted from the first light emitter 100 and directs all the first light signals towards the first focus of the first light redirector 1101 where the plurality of first light signals having different optical paths is focused. The physical size of the third light redirector 130 can be much smaller relative to the first light redirector 110 since it is located at the focus of the first light redirector 110 and requires little amount of surface for receiving the plurality of first light signals from the first light redirector 110. This is particular advantageous for the design of HWDs because the physical size of the HWDs can be drastically reduced. Furthermore, by placing the third light redirector 130 in proximity to the first focus of the first light redirector 1101, all the light signals from the first light redirector 110 can be received by the third light redirector 130. In this embodiment, the third light redirector 130 is also positioned in proximity to (or nearly at) the first focus of the second light redirector 1201, such that the second light redirector 120 can receive all the first light signals from the third light redirector 130.

In some instances (with reference to FIG.5) the first light redirector 110 may comprise a second focus 1102. The first light emitter 100 is provided in proximity to (or nearly at) the second focus of the first light redirector 1102. In this configuration, the magnitude of the change in the direction of projection can be maximize and ensuring all the light signals can be received by the first light redirector 110. Notice that in the present invention, the first focus of the first light redirector 1101, the second focus of the first light redirector 110, and the first focus of the second light redirector 1201 are not align in a same line (not collinearly arranged). In this way, these optical elements can be arranged in a more compact manner so as to reduce the final physical size of the HWD. As shown in FIG.5, in some instances, to insure the eye of the viewer can benefit from the full FOV created by the optical system in accordance with the present invention, as well as to ensure the viewer can perceive the entire image frame, the eye of the viewer is located in proximity to (or nearly at) a second focus of the second light redirector 1202.

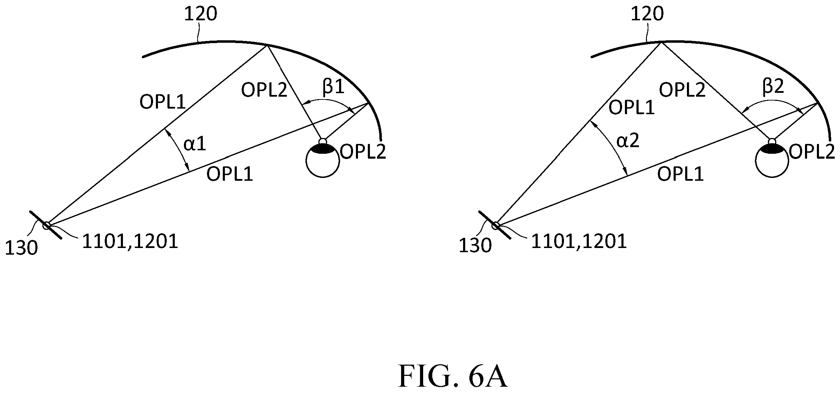

With reference to FIGS. 6A-6C, the converge angle β1 and β2 of the first light signals redirected by the second light redirector 120 toward the eye of the viewer is directly related to the FOV of the image frame; and the converge angle β1 and β2 are directly affected by the dispersion angle α1 and α2. In another words, the FOV of the image frame changes along with the change in the dispersion angle α. If the dispersion angle α increases, the FOV increases as well. With reference to FIG.5 and 6A-6C, the FOV of the image frame can be modified by altering the difference between the optical path length from the third light redirector 130 to the surface of the second light redirector 120 and the optical path length from the surface of the second light redirector 120 to the eye of the viewer. More specifically (with reference to FIG.6A), when the optical path length (for a light signal) from the third light redirector 130 to the surface of the second light redirector 120 (denoted by OPL1) decreases relative to the optical path length from the surface of the second light redirector 120 to the eye of the viewer (denoted by OPL2), the FOV of the image frame decreases; on the other hand, when the optical path length (for a light signal) from the third light redirector 130 to the surface of the second light redirector 120 increases relative to the optical path length from the surface of the second light redirector 120 to the eye of the viewer, the FOV of the image frame increases. There are several factors that can affect the difference between OPL1and OPL2. The following describes the factors and methods for modifying the difference between OPL1and OPL2, and thus, altering the FOV of the virtual image.

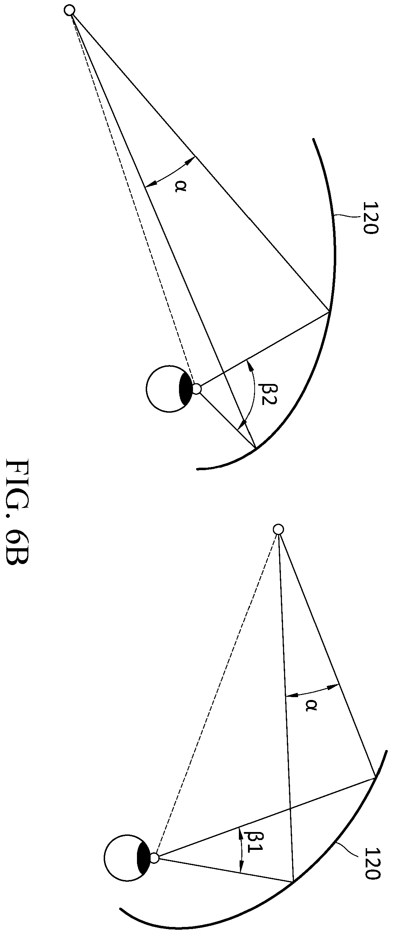

The orientation of the second light redirector 120 can be modified to change the difference between OPL1and OPL2 . With reference to FIG.6B, both figures illustrate the plurality of light signals with the same dispersion angle α from the third light redirector 130 (or from the first light redirector 110); when the plurality of light signals is directed to different portions of the surface of the same second light redirector 120 (thereby changing the difference between OPL1and OPL2), converge angle (β1 and β2) may still be different. The orientation of the second light redirector 120 relative to the eye of the viewer may be expressed by the angle of an axis of the second light redirector 120 (e.g., the axis that passes through both the first and second focus of the second light redirector 120) relative to the eye of the viewer. In some other embodiments, if the eye of the viewer is located at the second focus of the second light redirector 1202, the orientation may be expressed by the relative location of the first focus of the second light redirector 1201 relative to the eye of the viewer. As shown in FIG. 6A and 6B, by changing the orientation of the second light redirector 120, the difference between OPL1and OPL2 is affected to yield different FOV. In some embodiments, the geometry of the second light redirector 120 can be modified to optimize the difference between OPL1and OPL2 to create the desirable FOV. Yet in another embodiment, the angle of incident of the light signal from the first light redirector 110 to the third light redirector 130 can be modified (thereby changing the magnitude of dispersion angle α, or changing the location of the light signals on the second light redirector 120) to affect the difference between OPL1and OPL2 to create the desirable FOV.

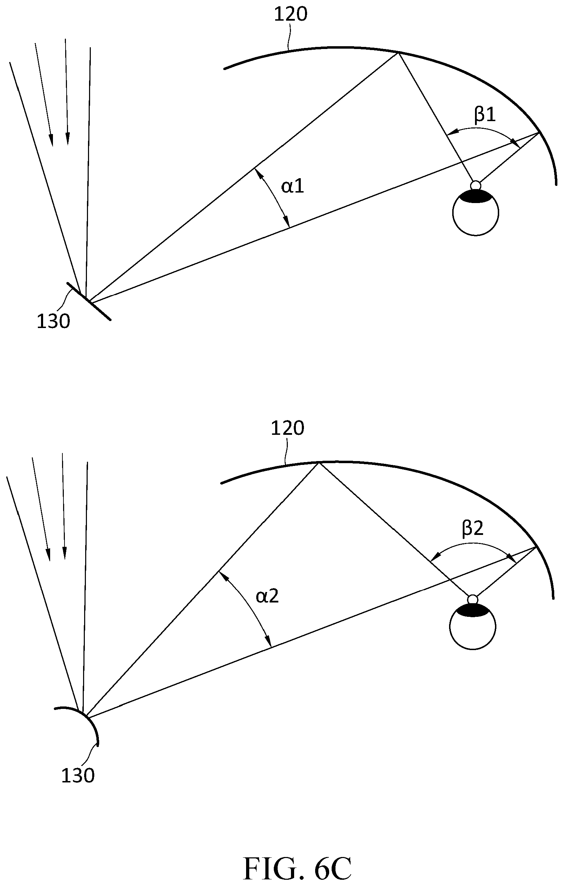

In addition to changing the difference between OPL1and OPL2, with reference to FIG. 6C, the geometry of the third light redirector 130 can be configured to alter the FOV of the image frame projected to the viewer's eye. For example, the curvature of the third light redirector 130 may be changed to be concave, convex or flat depending on the applications such that a dispersion angleαof the plurality of first light signals redirected toward the second light redirector 120 from the third light redirector 130 can be altered. As an example, FIG.6C shows to configuration of the third light redirector 130, one of which is flat and the other is convex. The convex third light redirector 130 creates a larger dispersion angle relative to the flat third light redirector 130 (α2>α1). In some embodiments, it may be desirable for the light incident surface of the third light redirector 130 to be convex to maximized dispersion angle α while ensuring all of the first light signals are received by the second light redirector 120 and redirected by the second light redirector 120 toward the eye of the viewer by setting the third light redirector 130 and the eye of the viewer at different foci of the second light redirector 120. In some other embodiments, the angle of the reflection of the third light redirector 130 can be adjusted to change the FOV of the virtual image. The angle of the reflection can be modified simply by rotating the third light redirector 130 toward a particular direction.

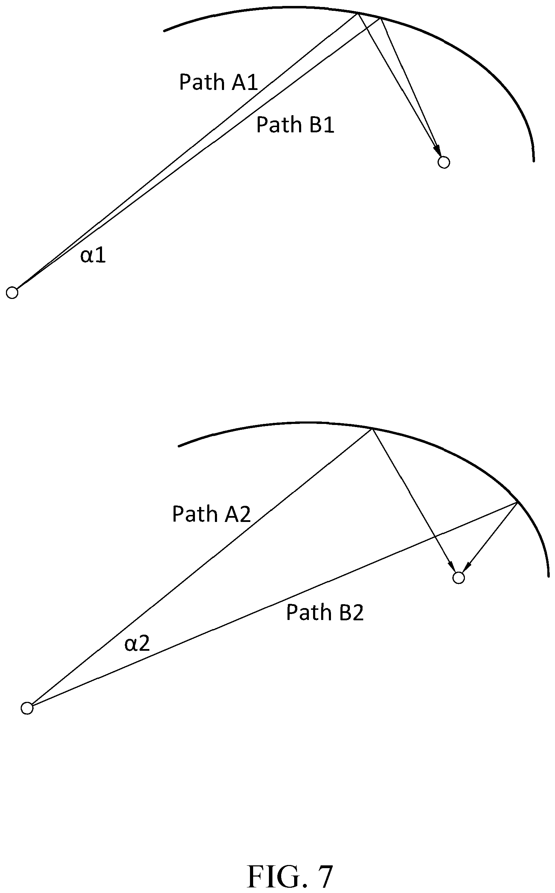

Although larger FOV is generally desirable; however, it is known that the distortion of image frame will be worsen when the dispersion angle α is increased due to the fact that the optical path length difference among different light signals increases along with the increase in the dispersion angle α (as shown in to FIG. 7, the optical path length difference between path A1 and B1 is smaller than the optical path length difference between path A2 and B2). In other words, optical path length difference among the plurality of light signals is the key factor for creating image frame distortion. With reference to FIG. 5 again, to resolve this issue, the present invention implements at least two light redirectors (i.e., the first and second light redirectors) to counter balance the optical path length difference among the light signals. The geometry of the first light redirector 110 is configured to compensate for the optical path length difference such that the light signal emitted by the first light emitter 100 in proximity to the first spatial dimension limit (which corresponds to the edge of the image frame) has a total optical path length from the first light emitter 100 to the eye of the viewer substantially equal to a total optical path length of another light signal emitted by the first light emitter 100 in proximity to the second spatial dimension limit (which corresponds to another edge of the image frame) from the first light emitter 100 to the eye of the viewer. With this method, the distortion among the edges of the image frame can be remedied. More specifically, with reference to FIG. 5, the optical path length for a light signal S1 from the third light redirector 130 to the eye of the viewer is P₁₃+ P₁₄; the optical path length for a light signal S2 from the third light redirector 130 to the eye of the viewer is P₂₃+ P₂₄. For the case where P₁₃+P₁₄ > P₂₃+ P₂₄ (S1 has a greater optical path length than S2 from the from the third light redirector 130 to the eye of the viewer), the geometry of the first light redirector 110 is configure such that that P₁₁+ P₁₂ < P₂₁+ P₂₂ (S1 has a shorter optical path length than S2 from the light emitter 100 to the third light redirector 130). As a result, the total optical path length for a light signal S1, which is P₁₁ + P₁₂ + P₁₃+ P₁₄ is sustainably the same as the total optical path length for a light signal S2, which is P₂₁ + P₂₂ + P₂₃+ P₂₄. With the same logic, for the case where P₁₃+ P₁₄ < P₂₃+ P₂₄, the geometry of the first light redirector 110 is configure such that that P₁₁+ P₁₂ > P₂₁+ P₂₂. The geometry of the optical elements (including the first light redirector 110, the third light redirector 130, and the second light redirector 120) mentioned in the present invention may refer to the curvature of a surface of the optical elements, the shape of the optical elements, the orientation of the major/minor axis of the optical elements, and/or the location of the optical elements. In some instances, the geometry of the optical element affects the location of the foci of the optical elements, as well as other optical properties of the optical element.

The aforementioned method for eliminating image frame distortion among the edges of the image frame can be implemented to reduce distortion from other area of the image frame as well. In some embodiments, the geometry of the first light redirector 110, the third light redirector 130, and the second light redirector 120 can be configured such that a total optical path length from the first light emitter 100 to the eye of the viewer of a first light signal of the plurality of first light signals in locations other than the first and second spatial dimension limit is substantially equal to the total optical path length of the light signal emitted in proximity to the first spatial dimension limit and the second spatial dimension limit.

In some embodiments (as shown in the previous figures), the first light redirector 110 comprises two foci located in a space between the first light redirector 110 and the eye of the viewer; or in other words, the two foci are located on the same side of the first light redirector 110. The third light redirector 130 is located in proximity to (or nearly at) the first focus of the first light redirector 1101 and the first focus of the second light redirector 1201 (namely, the first focus of the first light redirector 1101 and the first focus of the second light redirector 1201 are at a same spatial location). Meanwhile, the first light emitter 100 may be located in proximity to a second focus of the first light redirector 110. As an example, the light emitter may comprises a MEMS mirror for changing the direction of projection of the first light signals. The MEMES mirror can be placed in proximity to the second focus of the first light redirector 110. In some variations of the present invention, the second light redirector 120 comprises two foci located in a space between the second light redirector 120 and the eye of the viewer; or the two foci of the second light redirector 120 are located on the same side of the second light redirector 120. The eye of the viewer is located in proximity to a second focus of the second light redirector 1202. The advantageous of having such configuration are readily describe previously. As an example, a surface for receiving the plurality of first light signals of the first light redirector 110 or a surface for receiving the plurality of first light signals of the second light redirector 120 is an elliptic curve in this embodiment; therefore, the surface may have at least two foci. In some embodiments, either a surface for receiving the plurality of first light signals of the first light redirector 110 or a surface for receiving the plurality of first light signals of the second light redirector 120 is an elliptic curve. In some embodiments, both the surface for receiving the plurality of first light signals of the first light redirector 110 and the surface for receiving the plurality of first light signals of the second light redirector 120 are elliptic curves. In some embodiments, the surface for receiving the plurality of first light signals of the first light redirector or the surface for receiving the plurality of first light signals of the second light redirector is a non-spherical curve or a free-form curve. The surface of the first light redirector 110 and the surface of the second light redirector 120 may comprise different curvatures; that is to say, they are part of ellipse with different major and/or minor axis. Although the first light redirector 110 and the second light redirector 120 have different curvatures; however, in some embodiment, they may be integrally formed to a one-piece optical element. The third light redirector 130 is a reflective mirror which reflects a majority (more than 60% of the received light) of the light to another direction. In other embodiment, the third light redirector 130 can be any reflective optical elements which reflects a majority (more than 60% of the received light) of the light to another direction (e.g., to the second light redirector 120). On the other hand, the first light redirector 110 or the second light redirector 120 is at least partially permeable for environmental light to enter the eye of the viewer. In the case where the present invention is applied as the optical system or AR HWDs, the second light redirector 120 may be equivalent to the combiner of the conventional AR HWDs, which allows the environmental light to pass through the second light redirector 120 into the eye of the viewer. Thereby, an augmented image comprising both virtual image and real world image can be created.

For demonstrative purpose, the following provides the specifications for the first light redirector 110 and the second light redirector 120. The diameters of the first light redirector 110 and the second light redirector 120 may respectively be ranging from 10mm-40mm. The distance from the center of the first and second light redirector 120 to the first focus and the second focus may respectively be from 10mm-20mm and 20mm-30mm. The distance between the center of the first light redirector 110 and the center of the second light redirector 120 is 25mm-40mm. The maximum FOV of the image frame may be approximately 60 degrees and the eye relief of the present embodiment is approximately 15mm-30mm.

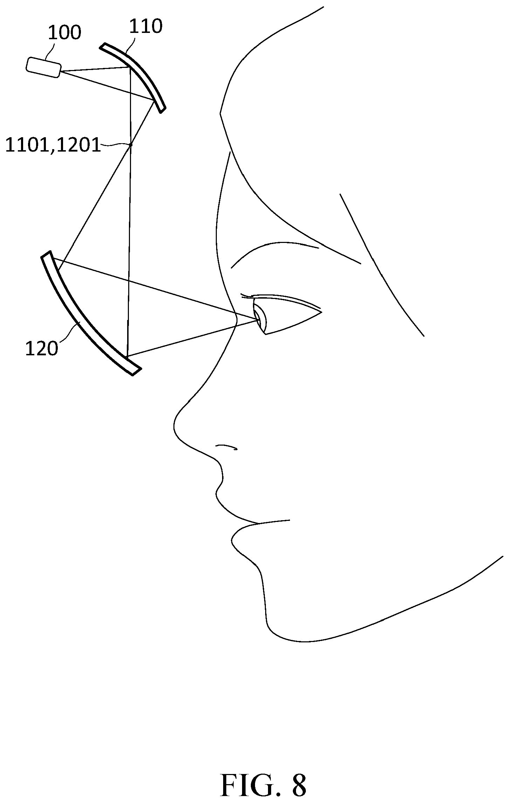

With reference to FIG. 8, which show another variation of an embodiment not according to the claimed invention. The configurations and features of this embodiment are similar to that of the previously mentioned embodiments. The optic system for head wearable devices comprises the first light emitter 100, the first light redirector 110, and the second light redirector 120. The third light redirector 130 from the previous embodiment is omitted in this embodiment. The first light redirector 110 receives the plurality of first light signals and changes a direction of each of the plurality of first light signals. The second light redirector 120 directs the plurality of first light signals received from the first light redirector 110 toward an eye of a viewer, so the viewer perceives the image frame. The first light redirector 110 and the second light redirector 120 is positioned such that the first focus of the first light redirector 1101 and the first focus of the second light redirector 1201 are at a same spatial location. Furthermore, in one embodiment, the first light redirector 110 can be position at a vertical position higher than the second light redirector 120, as shown in FIG. 8. With this configuration, the light emitter is place at a location closer to the forehead of the user. In this embodiment, the geometry of the first light redirector 110 is also configured so that a light signal emitted by the first light emitter 100 in proximity to the first spatial dimension limit has a total optical path length from the first light emitter 100 to the eye of the viewer substantially equal to a total optical path length of another light signal emitted by the first light emitter 100 in proximity to the second spatial dimension limit from the first light emitter 100 to the eye of the viewer. For optimizing the FOV perceived by the viewer, the location where the plurality of first light signals is projected onto the first light redirector 110 can be adjusted to change the final FOV perceived by the viewer.

In the foregoing embodiment, the FOV of the image frame can be modified by altering the difference between the optical path length from the third light redirector 130 to the surface of the second light redirector 120 and the optical path length from the surface of the second light redirector 120 to the eye of the viewer as well. Similar to the previous embodiment, the orientation of the second light redirector 120 can be modified to change the difference between OPL1and OPL2. In some embodiments, the geometry of the second light redirector 120 can be modified to optimize the difference between OPL1and OPL2 to create the desirable FOV; or the angle of incident of the light signal from the first light redirector 110 to the third light redirector 130 can be modified to affect the difference between OPL1and OPL2 to create the desirable FOV.

For demonstrative purpose, the following provides the specifications for the first light redirector 110 and the second light redirector 120 for this embodiment. The diameters of the first light redirector 110 and the second light redirector 120 may respectively be ranging from 20mm-35mm. The distance from the center of the first and second light redirector 120 to the first focus and the second focus may respectively be from 30mm-40mm and 60mm-80mm. The distance between the center of the first light redirector 110 and the center of the second light redirector 120 is 50-55mm. The maximum FOV of the image frame may be approximately 60 degrees, and the eye relief of the present embodiment is approximately 60mm.

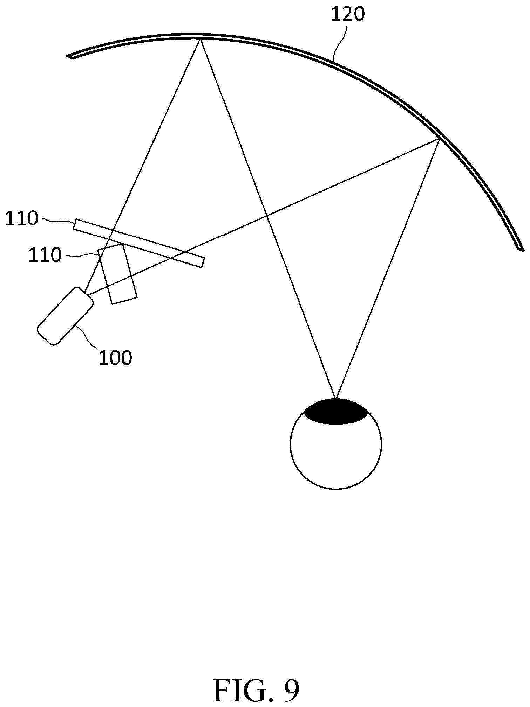

With reference to FIG. 9, which shows an embodiment not according to the claimed invention. The first light redirector 110, the second light redirector 120, and the third light redirector 130 may respectively be a cylindrical lens, an elliptical or parabolic lens, and a cylindrical lens. The first light redirector 110 and the third light redirector 130 in this embodiment are a correction assembly which serves the purpose of correcting distortion for the image frame caused by the second light redirector 120. As an example, the first light redirector 110 may be a concave lens, and the second cylindrical lens may be a convex lens.

With the design of the present embodiment, a FOV of approximately 40 degrees in the horizontal direction can be achieved. Furthermore, the FOV in the vertical direction on left side of the image frame is approximately the same as the FOV in the vertical direction on the right side of the image frame (1:1 ratio). The FOV in the horizontal direction on the top of the image frame is also similar to that of the bottom of the image frame.

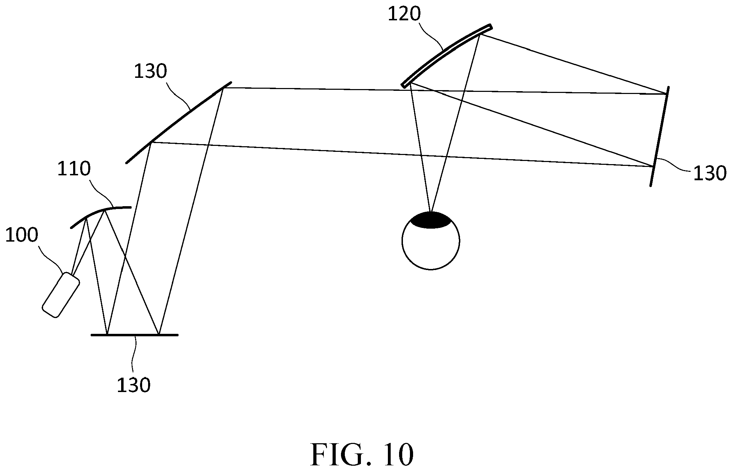

With reference to FIG.10, which shows an embodiment not according to the claimed invention. In the present embodiment, the optic system for HWDs comprises a first light emitter 100, a combiner (which is equivalent to the second light redirector 120), and a correction assembly. The correction assembly may comprise three transitional mirrors (which is equivalent to the third light redirector 130), and a first parabolic reflector (which is equivalent to the first light redirector 110). Transitional mirrors are located in between the first parabolic reflector and the combiner. The combiner may be a parabolic reflector. The light signals produced by the first light emitter 100 is initially reflected by the first parabolic reflector of the correction assembly to the transitional mirror. The light is then reflected by the transitional mirror to the second parabolic reflector (which may be the combiner of the head wearable device). In some embodiment, the third transitional mirror may be provided between the first transitional mirror and the second transitional mirror for increasing the optical path length of the light. The first parabolic reflector is meant to provide a complimentary light profile to balance the distortion caused by the combiner. This mean, after the light is reflected by both the first parabolic reflector and the combiner, the distortion caused by the two parabolic reflectors cancel each other, thus creating a desired light profile when light enters the viewer's eye. Another key feature of the present embodiment is that parallel light signals are created by the first parabolic reflector after the light signals are reflected by the first parabolic reflector. Therefore, the light signals between the first transitional mirror and the second transitional mirror are also parallel with each other. This is advantages because the optical path length in between the first transitional mirror and the second transitional mirror can be adjust as desired based on form factor.

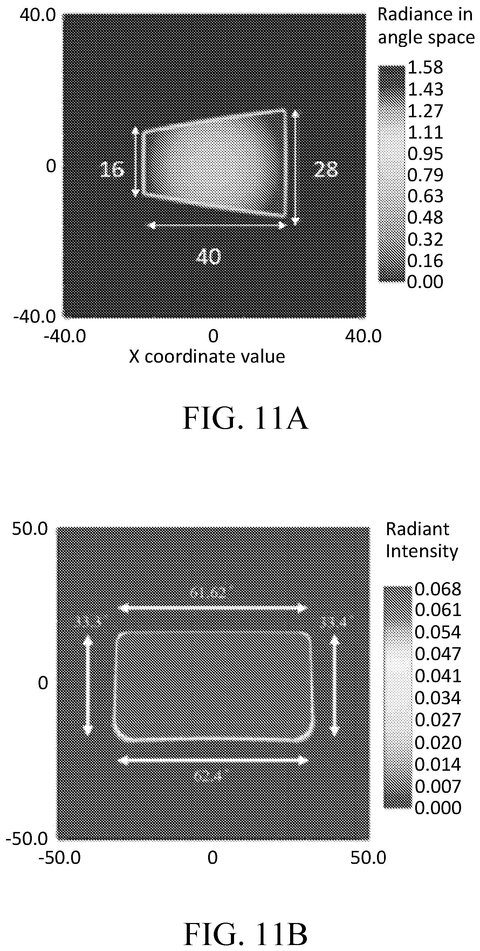

The following demonstrate the distortion correction performance of the present invention. As mentioned earlier, in some embodiment of the present invention, the image frame is substantially a quadrilateral having a first side, a second side, a third side, and a fourth side; the first side and the third side are comprised of a same number of light signals; and the second and fourth side are comprised of a same number of light signals. With reference to FIG.11, for exemplary purpose, the present disclosure uses rectangular shaped image frame for illustrating the performance of the optic system of the present invention. FIG.11A shows the distortion correction performance of an optic system of a conventional art without using digital correction. The final image frame suffers substantial distortion in the vertical FOV (e.g., on the second and fourth side of the image frame) and the image frame is distorted into a trapezoid shape. The FOV ratio (which is the same as the ratio of the length) of the second side to the fourth side of the image frame is approximately 0.57. FIG.11B shows the distortion correction performance of the optic system of the present invention (also without using digital correction). The image frame retains its intended rectangular shape with the FOV ratio (which is the same as the ratio of the length) of the second side to the fourth side of the image frame close to 1. The FOV ratio of the first side to the third side (horizontal FOV) of the image frame is also close to 1. For demonstrative purpose, it has been measured that the ratio of a FOV (or length) of the first side to a FOV (or length) of the third side is 0.95-1.05; similarly, the ratio of a FOV (or length) of the second side to a FOV (or length) of the fourth side is also 0.95-1.05. Evidently, the present invention does not require digital distortion correction which involves trimming a small portion of the image frame. As a result, the entire image information (in terms of resolution and number of pixels) of the image frame can be retained with the implementation of the optic system disclosed in the present invention. In addition to FOV, with the design of the present invention, the light uniformity of light intensity across the entire image frame can be improved.

Another the key advantage of the present invention reside in that the present invention offers optical distortion correction as appose to digital correction; this feature enable the present invention to consume less power relative to HWDs utilizing digital distortion correction. Furthermore, it is already known that digital distortion correction may remove the distorted portion of the image frame during the course of image correction. In accordance with the present invention, none of the portions of the image frame will be removed. As a result, the resolution and sharpness of the image frame are retained. In addition to the advantages above, the eye relief is reduced in the present embodiment relative to the prior art. It has been proven that the eye relief of the present embodiment can be reduced to approximately 15mm-30mm. In addition, since both eye relief and FOV are optimized, the area of eye-box (the volume of space within which an effectively viewable image is formed) can also be expanded.

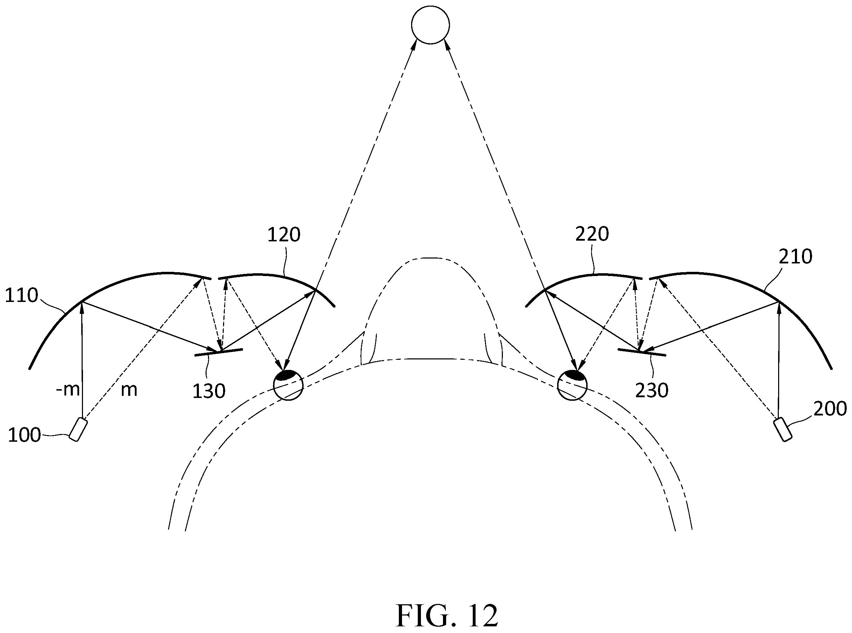

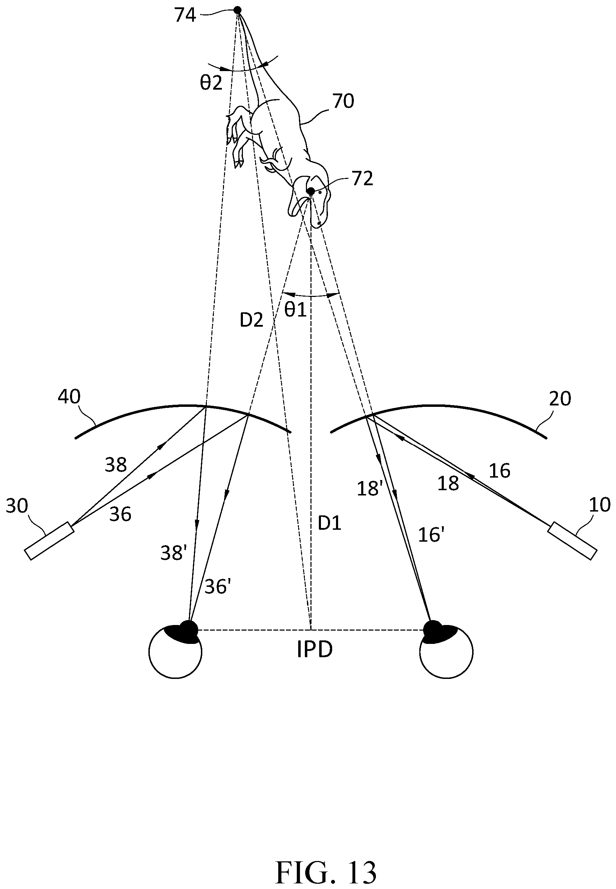

In order to render a virtual image in a 3-dimensional space, the optic system in accordance to the present need to be applied to both eyes of the viewer. In theory, the optic system for both eyes of the viewer should comprises the same optical elements. With reference to FIGS.12 and 13, the method for rendering a virtual image in a 3-dimensional space is described in the following. The optic system for HWDs according to the present invention can further comprise a second light emitter 200 for emitting a plurality of second light signals. Each of the plurality of first light signals has a corresponding second light signal from the plurality of second light signals. More specifically, each of the plurality of first light signals and the corresponding second light signal can be perceived by the eyes of the viewer to form a binocular light signal via fusion of human vision; as a result, the viewer can only perceive on single binocular light signal composed of a single first light signal and the corresponding second light signal. In this embodiment, the optic system further comprises a fourth light redirector 210, and a fifth light redirector 220 for receiving the plurality of second light signals and changing a direction of each of the plurality of second light signals. Similar to the first and second light redirectors 110 and 120, the fourth light redirector 210 receives the plurality of second light signals and directs the plurality of second light signals toward the fifth light redirector 220, the fifth light redirector 220 directs the plurality of second light signals received from the fourth light redirector 210 toward an another eye of the viewer such that the plurality of second light signals is projected toward an another retina of the viewer. A first and second virtual image composed of the plurality of first and second light signals respectively are perceived by the viewer as on a side of the second light redirector 120 opposite to a side where the eye of the viewer is located, and on a side of the fifth light redirector 220 opposite to a side where the another eye of the viewer is located. The optic system may further comprise a sixth light redirector 230 (which is equivalent to the aforementioned third light redirector 130) for receiving the plurality of second light signals and changing a direction of each of the plurality of second light signals. In this case, the fourth light redirector 210 receives the plurality of second light signals and directs the plurality of second light signals toward the sixth light redirector, the sixth light redirector 230 directs the plurality of second light signals received from the fourth light redirector 210 toward the fifth light redirector 220, the fifth light redirector 220 directs the plurality of second light signals received from the sixth light redirector 230 toward the another eye of the viewer. In the present embodiment, the fourth light redirector 210 is equivalent to the first light redirector 110; the fifth light redirector 220 is equivalent to the second light redirector 120; and the third light redirector 130 is equivalent to the sixth light redirector 230.

In one embodiment, the viewer perceives a binocular virtual image or a binocular virtual pixel form by fusion of the first virtual image (or pixel) and the second virtual image (or pixel). For the convenience of describing the present invention, the binocular virtual image may be composed of only one pixel. The location of the binocular virtual image perceived by the viewer can be determined by the location of intersections between an optical path of the first light signal extending from the eye of the viewer to the second light redirector 120 and an optical path of the corresponding second light signal extending from the another eye of the viewer to the fifth light redirector 220. More importantly, according to the present invention, the depth perception of the binocular virtual image is controlled by adjusting an angle of convergence formed between the optical path extension of the first light signal and the optical path extension of the second light signals. The direction of the optical path extension of the first light signal and the second light signal can be varied by controlling a direction of projection of the first light emitter 100 and the second light emitter 200. This method for creating depth perception of the virtual image is consistent with natural vision of the human eyes because human brain determines a depth of an object in 3-dimensional space at least in part based on the angle of fixation of the eye, which is directly related to the angle of convergence formed between the optical path extension of the first light signal and the optical path extension of the second light signal. In some embodiments of the present invention, the right light signal and the corresponding left light signal for a virtual binocular pixel display an image of the same view angle. Thus, the intensity of red, blue, and green (RBG) color and/or the brightness of the right light signal and the left light signal are approximately the same. In other words, the right pixel and the corresponding left pixel are approximately the same. However, in some embodiment, the right pixel and the corresponding left pixel may not be the same.

The FIG.13 and further describes the method for rendering depth perception in accordance with the optic system of the present invention. The viewer perceives a virtual image 70 composed of multiple binocular pixels (e.g., a first virtual binocular pixel 72 and a second virtual binocular pixel 74). The first virtual binocular pixel 72 is displayed at a first depth D1 and the second virtual binocular pixel 74 displayed at a second depth D2. The angle of convergence of the first virtual binocular pixel 72 is Θ1 (first angle of convergence). The angle of convergence of the second virtual binocular pixel 74 is Θ2 (second angle of convergence). The first depth D1 correlates to the first angle of convergence Θ1. In particular, the first depth of the first virtual binocular pixel of the object can be determined by the first angle of convergence Θ1 between the light path extensions of the first light signal 36 and the corresponding second light signal 16. The first depth D1 of the first virtual binocular pixel 72 can be calculated approximately by the following formula: $Tan \left(\frac{θ}{2}\right) = \frac{IPD}{2 D}$ The distance between the right pupil and the left pupil is interpupillary distance (IPD). Similarly, the second depth D2 correlates to the second angle of convergence Θ2. In particular, the second depth D2 of the second virtual binocular pixel of the object can be determined approximately by the second angle Θ2 between the light path extensions of the first light signal 38 and the corresponding second light signal 18 with the same formula. Since the second virtual binocular pixel 74 is perceived by the viewer to be further away from the viewer (i.e., with larger depth) than the first virtual binocular pixel 72, the second angle Θ2 is smaller than the first angle Θ1. In addition, the angle between a redirected right light signal and a corresponding left light signal is determined by the relative horizontal distance of the right pixel and the left pixel. Thus, the depth of a virtual binocular pixel is inversely correlated to the relative horizontal distance between the right pixel and the corresponding left pixel forming the virtual binocular pixel. In other words, the deeper a virtual binocular pixel is perceived by the viewer, the smaller the relative horizontal distance at X axis between the right pixel and left pixel forming such a virtual binocular pixel is. For example, as shown in FIG. 2, the second virtual binocular pixel 74 is perceived by the viewer to have a larger depth (i.e., further away from the viewer) than the first virtual binocular pixel 72. Thus, the horizontal distance between the second right pixel and the second left pixel is smaller than the horizontal distance between the first right pixel and the first left pixel on the retina images.

In some variations of the present invention, the depth perception of the binocular image frame or binocular pixel may be a combination of the method aforementioned and the conventional parallax method (in part by the method disclosed in the present invention and in part by the parallax method). However, in some embodiment, the depth perception can be mainly rendered by the method disclosed in the present invention.

The foregoing description of embodiments is provided to enable any person skilled in the art to make and use the subject matter. Various modifications to these embodiments will be readily apparent to those skilled ir the art.

## Claims

1. An optic system for head wearable devices, comprising:
a first light emitter (100) for emitting a plurality of first light signals, the first light emitter (100) varying a direction of projection between a first spatial dimension limit and a second spatial dimension limit in a first dimension; and
a first light redirector (110), and a second light redirector (120) for receiving the plurality of first light signals and changing a direction of each of the plurality of first light signals; and
a third light redirector (130) located in proximity to a first focus of the first light redirector (110) and a first focus of the second light redirector (120), the third light redirector (130) being a reflective mirror, wherein
the first light redirector (110) receives the plurality of first light signals and directs the plurality of first light signals toward the third light redirector (130), the third light redirector (130) directs the plurality of first light signals received from the first light redirector (110) toward the second light redirector (120), the second light redirector (120) directs the plurality of first light signals received from the third light redirector (130) toward an eye of a viewer, so the viewer perceives a first image frame composed of the plurality of first light signals,
the first focus of the first light redirector (110) and the first focus of the second light redirector (120) are at a same spatial location, the first light redirector (110) receives the plurality of first light signals emitted from the first light emitter (100) and directs all the first light signals towards the first focus of the first light redirector (110) where the plurality of first light signals having different optical paths is focused at a same spatial location, and
a geometry of the first light redirector (110) is configured such that a light signal emitted by the first light emitter (100) in proximity to the first spatial dimension limit has a total optical path length from the first light emitter (100) to the eye of the viewer substantially equal to a total optical path length of another light signal emitted by the first light emitter (100) in proximity to the second spatial dimension limit from the first light emitter (100) to the eye of the viewer.

2. The optic system for head wearable devices of claim 1, wherein a total optical path length from the first light emitter (100) to the eye of the viewer of a first light signal of the plurality of first light signals not being emitted in proximity to the first spatial dimension limit or the second spatial dimension limit is substantially equal to the total optical path length of the light signal emitted by the first light emitter (100) in proximity to the first spatial dimension limit and the second spatial dimension limit, and/or wherein the first light redirector (110) and the second light redirector (120) is positioned such that a first focus of the first light redirector (110) and a first focus of the second light redirector (120) are at a same spatial location.

3. The optic system for head wearable devices of claim 1, wherein the first light emitter (100) is located in proximity to a second focus of the first light redirector (110), and/or wherein the eye of the viewer is located in proximity to a second focus of the second light redirector (120), and/or wherein the first light redirector (110) comprises two foci located on a same side of the first light redirector (110), and/or wherein the second light redirector (120) comprises two foci located on a same side of the second light redirector (120).

4. The optic system for head wearable devices of claim 1, wherein a converge angle of the plurality of the first light signals when traveling form the second light redirector (120) to the eye of the viewer correlates to a field of view of the first image frame to the eye of the viewer, and wherein preferably the field of view of the first image frame perceived by the eye of the viewer is modified by any one of the methods which include changing an orientation of the second light redirector (120) relative to the eye of the viewer, changing an angle of reflection of the third light redirector (130), and changing a curvature of the third light redirector (130).

5. The optic system for head wearable devices of claim 1, wherein the geometry of the first light redirector (110) includes a curvature of a surface of the first light redirector (110), and a location of the first focus of the first light redirector (110) and a location of a second focus of the first light redirector (110), and/or wherein a surface for receiving the plurality of first light signals of the first light redirector (110) or a surface for receiving the plurality of first light signals of the second light redirector (120) is an elliptic curve, and/or wherein a surface for receiving the plurality of first light signals of the first light redirector (110) or a surface for receiving the plurality of first light signals of the second light redirector (120) is a non-spherical curve or a free-form curve, and/or wherein the first light redirector (110) and the second light redirector (120) are integrally formed.

6. The optic system for head wearable devices of claim 1, wherein the first light redirector (110) or the second light redirector (120) is at least partially permeable for environmental light to enter the eye of the viewer.

7. The optic system for head wearable devices of claim 1, wherein the first light redirector (110) receives the plurality of first light signals and directs the plurality of first light signals toward the second light redirector (120) such that the plurality of first light signals is directed toward a retina of the viewer and a first virtual image in the first image frame composed of the plurality of first light signal is perceived by the viewer as on a side of the second light redirector (120) opposite to a side where the eye of the viewer is located.

8. The optic system for head wearable devices of the previous claim, further comprising:
a second light emitter (200) for emitting a plurality of second light signals;
a fourth light redirector (210), and a fifth light redirector (220) for receiving the plurality of second light signals and changing a direction of each of the plurality of second light signals;
wherein the fourth light redirector (210) receives the plurality of second light signals and directs the plurality of second light signals toward the fifth light redirector (220), the fifth light redirector (220) directs the plurality of second light signals received from the fourth light redirector (210) toward an another eye of the viewer such that the plurality of second light signals is directed toward an another retina of the viewer and a second virtual image from a second image frame composed of the plurality of second light signals is perceived by the viewer as on a side of the fifth light redirector (220) opposite to a side where the another eye of the viewer is located,
wherein the viewer perceives a binocular virtual image formed by fusion of the first virtual image and the second virtual image, wherein a location of the binocular virtual image is determined by intersections between an optical path of the plurality of first light signals extending from the eye of the viewer to toward the second light redirector (120) and an optical path of the corresponding plurality of second light signals extending from the another eye of the viewer to the fifth light redirector (220), a depth perception of the binocular virtual image is determined at least in part by an angle of convergence formed between the optical paths of the plurality of first light signals and the optical paths of the plurality of second light signals.

9. The optic system for head wearable devices of claim 1, wherein the first light redirector (110) receives the plurality of first light signals and directs the plurality of first light signals toward the second light redirector (120) such that the plurality of first light signals is directed toward a retina of the viewer and a plurality of first virtual pixel is formed on a side of the second light redirector (120) opposite to a side where the eye of the viewer is located.

10. The optic system for head wearable devices of the previous claim, further comprising:
a second light emitter (200) for emitting a plurality of second light signals; and
a fourth light redirector (210), and a fifth light redirector (220) for receiving the plurality of second light signals and changing a direction of each of the plurality of second light signals;
wherein the fourth light redirector (210) receives the plurality of second light signals and directs the plurality of second light signals toward the fifth light redirector (220), the fifth light redirector (220) directs the plurality of second light signals received from the fourth light redirector (210) toward an another eye of the viewer such that the plurality of second light signals is projected toward an another retina of the viewer and a plurality of second virtual pixels from a second image frame is formed on a side of the fifth light redirector (220) opposite to a side where the another eye of the viewer is located,
wherein the viewer perceives a binocular virtual pixel by fusion of one of the plurality of first virtual pixels and a corresponding second virtual pixel from the plurality of the second virtual pixels,
wherein a location of the binocular virtual pixel is determined by intersection between an optical path of the one of the plurality of first virtual pixels extending from the eye of the viewer to the second light redirector (120) and an optical path of the corresponding second virtual pixel extending from the another eye of the viewer to the fifth light redirector (220), a depth perception of the binocular virtual pixel is determined by an angle of convergence formed between the optical paths of the one of the plurality of first virtual pixels extending from the eye of the viewer to the second light redirector (120) and the optical path of the corresponding second virtual pixel.

11. The optic system for head wearable devices of claims 8 or 10, further comprising:
a sixth light redirector (230) for receiving the plurality of second light signals and changing a direction of each of the plurality of second light signals;
wherein the fourth light redirector (210) receives the plurality of second light signals and directs the plurality of second light signals toward the sixth light redirector (230), the sixth light redirector (230) directs the plurality of second light signals received from the fourth light redirector (210) toward the fifth light redirector (220), the fifth light redirector (220) directs the plurality of second light signals received from the sixth light redirector (230) toward the another eye of the viewer,
wherein the sixth light redirector (230) is located in proximity to a first focus of the fourth light redirector (210) and a first focus of the fifth light redirector (220).

12. The display system for head wearable devices of claim 1, wherein the image frame is substantially a quadrilateral having a first side, a second side, a third side, and a fourth side, the first side and the third side are comprised of a same number of light signals, the second and fourth side are comprised of a same number of light signals, wherein a ratio of a length of the first side to a length of the third side is 0.95-1.05, and/or wherein a closest distance from the second light redirector (120) to the eye of the viewer is from 15 mm to 30 mm.

## Patentansprüche

1. Optisches System für am Kopf tragbare Vorrichtungen, aufweisend:
einen ersten Lichtemitter (100) zum Emittieren einer Vielzahl von ersten Lichtsignalen, wobei der erste Lichtemitter (100) eine Projektionsrichtung zwischen einer ersten räumlichen Dimensionsgrenze und einer zweiten räumlichen Dimensionsgrenze in einer ersten Dimension variiert; und
einen ersten Lichtumlenker (110) und einen zweiten Lichtumlenker (120) zum Empfangen der Vielzahl von ersten Lichtsignalen und zum Ändern einer Richtung jedes der Vielzahl von ersten Lichtsignalen; und
einen dritten Lichtumlenker (130), der in der Nähe eines ersten Brennpunkts des ersten Lichtumlenkers (110) und eines ersten Brennpunkts des zweiten Lichtumlenkers (120) angeordnet ist, wobei der dritte Lichtumlenker (130) ein reflektierender Spiegel ist, wobei
der erste Lichtumlenker (110) die Vielzahl von ersten Lichtsignalen empfängt und die Vielzahl von ersten Lichtsignalen in Richtung zum dritten Lichtumlenker (130) lenkt, der dritte Lichtumlenker (130) die Vielzahl der vom ersten Lichtumlenker (110) empfangenen ersten Lichtsignale in Richtung zum zweiten Lichtumlenker (120) lenkt, der zweite Lichtumlenker (120) die Vielzahl der vom dritten Lichtumlenker (130) empfangenen ersten Lichtsignale in Richtung zum Auge eines Betrachters lenkt, so dass der Betrachter einen ersten Bildrahmen, der sich aus der Vielzahl erster Lichtsignale zusammensetzt, wahrnimmt,
der erste Brennpunkt des ersten Lichtumlenkers (110) und der erste Brennpunkt des zweiten Lichtumlenkers (120) sich an der gleichen räumlichen Position befinden, der erste Lichtumlenker (110) die Vielzahl von ersten Lichtsignalen empfängt, die vom ersten Lichtemitter (100) emittiert werden, und alle ersten Lichtsignale in Richtung zum ersten Brennpunkt des ersten Lichtumlenkers (110) lenkt, wobei die Vielzahl von ersten Lichtsignalen, die unterschiedliche optische Pfade aufweisen, an der gleichen räumlichen Position fokussiert werden, und
die Geometrie des ersten Lichtumlenkers (110) derart konfiguriert ist, dass ein durch den ersten Lichtemitter (100) in der Nähe der ersten räumlichen Dimensionsgrenze emittiertes Lichtsignal eine gesamte optische Weglänge vom ersten Lichtemitter (100) zum Auge des Betrachters aufweist, die im Wesentlichen gleich der gesamten optischen Weglänge eines anderen Lichtsignals ist, das durch den ersten Lichtsender (100) in der Nähe der zweiten räumlichen Dimensionsgrenze vom ersten Lichtsender (100) zum Auge des Betrachters emittiert wird.

2. Optisches System für am Kopf tragbare Vorrichtungen nach Anspruch 1, wobei eine gesamte optische Weglänge vom ersten Lichtemitter (100) zum Auge des Betrachters eines ersten Lichtsignals aus der Vielzahl von ersten Lichtsignalen, das nicht in der Nähe der ersten räumlichen Dimensionsgrenze oder der zweiten räumlichen Dimensionsgrenze emittiert wird, im Wesentlichen gleich der gesamten optischen Weglänge des Lichtsignals ist, das durch den ersten Lichtemitter (100) in der Nähe der ersten räumlichen Dimensionsgrenze und der zweiten räumlichen Dimensionsgrenze emittiert wird, und/oder wobei der erste Lichtumlenker (110) und der zweite Lichtumlenker (120) derart positioniert sind, dass ein erster Brennpunkt des ersten Lichtumlenkers (110) und ein erster Brennpunkt des zweiten Lichtumlenkers (120) sich an der gleichen räumlichen Position befinden.

3. Optisches System für am Kopf tragbare Vorrichtungen nach Anspruch 1, wobei sich der erste Lichtemitter (100) in der Nähe eines zweiten Brennpunkts des ersten Lichtumlenkers (110) befindet, und/oder wobei sich das Auge des Betrachters in der Nähe eines zweiten Brennpunkts des zweiten Lichtumlenkers (120) befindet, und/oder wobei der erste Lichtumlenker (110) zwei Brennpunkte aufweist, die sich auf der gleichen Seite des ersten Lichtumlenkers (110) befinden, und/oder wobei der zweite Lichtumlenker (120) zwei Brennpunkte aufweist, die sich auf der gleichen Seite des zweiten Lichtumlenkers (120) befinden.

4. Optisches System für am Kopf tragbare Vorrichtungen nach Anspruch 1, wobei ein Konvergenzwinkel der Vielzahl von ersten Lichtsignalen auf ihrem Weg vom zweiten Lichtumlenker (120) zum Auge des Betrachters mit einem Sichtfeld des ersten Bildrahmens für das Auge des Betrachters korreliert, und wobei vorzugsweise das durch das Auge des Betrachters wahrgenommene Sichtfeld des ersten Bildrahmens durch eines der folgenden Verfahren modifiziert wird: Ändern einer Ausrichtung des zweiten Lichtumlenkers (120) relativ zum Auge des Betrachters, Ändern eines Reflexionswinkels des dritten Lichtumlenkers (130) und Ändern einer Krümmung des dritten Lichtumlenkers (130).

5. Optisches System für am Kopf tragbare Vorrichtungen nach Anspruch 1, wobei die Geometrie des ersten Lichtumlenkers (110) eine Krümmung einer Oberfläche des ersten Lichtumlenkers (110) und eine Position des ersten Brennpunkts des ersten Lichtumlenkers (110) und eine Position eines zweiten Brennpunkts des ersten Lichtumlenkers (110) aufweist, und/oder wobei eine Oberfläche zum Empfangen der Vielzahl von ersten Lichtsignalen des ersten Lichtumlenkers (110) oder eine Oberfläche zum Empfangen der Vielzahl von ersten Lichtsignalen des zweiten Lichtumlenkers (120) eine elliptische Kurve ist, und/oder wobei eine Oberfläche zum Empfangen der Vielzahl von ersten Lichtsignalen des ersten Lichtumlenkers (110) oder eine Oberfläche zum Empfangen der Vielzahl von ersten Lichtsignalen des zweiten Lichtumlenkers (120) eine nicht-sphärische Kurve oder eine Freiformkurve ist, und/oder wobei der erste Lichtumlenker (110) und der zweite Lichtumlenker (120) integral ausgebildet sind.

6. Optisches System für am Kopf tragbare Vorrichtungen nach Anspruch 1, wobei der erste Lichtumlenker (110) oder der zweite Lichtumlenker (120) zumindest teilweise durchlässig für Umgebungslicht ist, damit dieses in das Auge des Betrachters eintreten kann.

7. Optisches System für am Kopf tragbare Vorrichtungen nach Anspruch 1, wobei der erste Lichtumlenker (110) die Vielzahl von ersten Lichtsignalen empfängt und die Vielzahl von ersten Lichtsignalen in Richtung zum zweiten Lichtumlenker (120) lenkt, so dass die Vielzahl von ersten Lichtsignalen auf die Netzhaut des Betrachters gelenkt werden und ein erstes virtuelles Bild im ersten Bildrahmen, das sich aus der Vielzahl von ersten Lichtsignalen zusammensetzt, durch den Betrachter so wahrgenommen wird, als befände es sich auf einer Seite des zweiten Lichtumlenkers (120), die der Seite gegenüberliegt, auf der sich das Auge des Betrachters befindet.

8. Optisches System für am Kopf tragbare Vorrichtungen nach dem vorhergehenden Anspruch, ferner aufweisend:
einen zweiten Lichtemitter (200) zum Emittieren einer Vielzahl von zweiten Lichtsignalen;
einen vierten Lichtumlenker (210) und einen fünften Lichtumlenker (220) zum Empfangen der Vielzahl von zweiten Lichtsignalen und zum Ändern einer Richtung jedes der Vielzahl von zweiten Lichtsignalen,
wobei der vierte Lichtumlenker (210) die Vielzahl von zweiten Lichtsignalen empfängt und die Vielzahl von zweiten Lichtsignalen in Richtung zum fünften Lichtumlenker (220) lenkt, der fünfte Lichtumlenker (220) die vom vierten Lichtumlenker (210) empfangene Vielzahl von zweiten Lichtsignalen in Richtung zu einem anderen Auge des Betrachters lenkt, so dass die Vielzahl von zweiten Lichtsignalen in Richtung zu einer anderen Netzhaut des Betrachters gelenkt wird und ein zweites virtuelles Bild von einem zweiten Bildrahmen, der aus der Vielzahl von zweiten Lichtsignalen zusammengesetzt ist, durch den Betrachter so wahrgenommen wird, als befände es sich auf einer Seite des fünften Lichtumlenkers (220), die der Seite gegenüberliegt, auf der sich das andere Auge des Betrachters befindet,
wobei der Betrachter ein binokulares virtuelles Bild wahrnimmt, das durch Vereinigen des ersten virtuellen Bildes und des zweiten virtuellen Bildes entsteht, wobei eine Position des binokularen virtuellen Bildes durch Schnittpunkte zwischen einem optischen Pfad der Vielzahl von ersten Lichtsignalen, der sich vom Auge des Betrachters in Richtung zum zweiten Lichtumlenker (120) erstreckt, und einem optischen Pfad der entsprechenden Vielzahl von zweiten Lichtsignalen bestimmt wird, der sich vom anderen Auge des Betrachters zum fünften Lichtumlenker (220) erstreckt, wobei eine Tiefenwahrnehmung des binokularen virtuellen Bildes zumindest teilweise durch einen Konvergenzwinkel bestimmt wird, der zwischen den optischen Pfaden der Vielzahl von ersten Lichtsignalen und den optischen Pfaden der Vielzahl von zweiten Lichtsignalen gebildet wird.

9. Optisches System für am Kopf tragbare Vorrichtungen nach Anspruch 1, wobei der erste Lichtumlenker (110) die Vielzahl von ersten Lichtsignalen empfängt und die Vielzahl von ersten Lichtsignalen in Richtung zum zweiten Lichtumlenker (120) lenkt, derart, dass die Vielzahl von ersten Lichtsignalen in Richtung zu einer Netzhaut des Betrachters gelenkt werden und eine Vielzahl erster virtueller Pixel auf einer Seite des zweiten Lichtumlenkers (120) gebildet werden, die der Seite gegenüberliegt, auf der sich das Auge des Betrachters befindet.

10. Optisches System für am Kopf tragbare Vorrichtungen nach dem vorhergehenden Anspruch, ferner aufweisend:
einen zweiten Lichtemitter (200) zum Emittieren einer Vielzahl von zweiten Lichtsignalen; und
einen vierten Lichtumlenker (210) und einen fünften Lichtumlenker (220) zum Empfangen der Vielzahl von zweiten Lichtsignalen und zum Ändern der Richtung jedes der Vielzahl von zweiten Lichtsignalen,
wobei der vierte Lichtumlenker (210) die Vielzahl von zweiten Lichtsignalen empfängt und die Vielzahl von zweiten Lichtsignalen in Richtung zum fünften Lichtumlenker (220) lenkt, der fünfte Lichtumlenker (220) die vom vierten Lichtumlenker (210) empfangene Vielzahl von zweiten Lichtsignalen in Richtung zu einem anderen Auge des Betrachters lenkt, so dass die Vielzahl von zweiten Lichtsignalen in Richtung zu einer anderen Netzhaut des Betrachters projiziert werden und eine Vielzahl von zweiten virtuellen Pixeln aus einem zweiten Bildrahmen auf einer Seite des fünften Lichtumlenkers (220) gebildet werden, die der Seite gegenüberliegt, auf der sich das andere Auge des Betrachters befindet,
wobei der Betrachter ein binokulares virtuelles Pixel durch Vereinigen eines der Vielzahl von ersten virtuellen Pixeln und eines entsprechenden zweiten virtuellen Pixels aus der Vielzahl der zweiten virtuellen Pixel wahrnimmt,
wobei eine Position des binokularen virtuellen Pixels durch den Schnittpunkt zwischen einem optischen Pfad des einen der Vielzahl von ersten virtuellen Pixeln, der sich vom Auge des Betrachters zum zweiten Lichtumlenker (120) erstreckt, und einem optischen Pfad des entsprechenden zweiten virtuellen Pixels bestimmt ist, der sich vom anderen Auge des Betrachters zum fünften Lichtumlenker (220) erstreckt, und wobei eine Tiefenwahrnehmung des binokularen virtuellen Pixels durch einen Konvergenzwinkel bestimmt wird, der zwischen dem optischen Pfad des einen der Vielzahl von ersten virtuellen Pixeln, der sich vom Auge des Betrachters zum zweiten Lichtumlenker (120) erstreckt, und dem optischen Pfad des entsprechenden zweiten virtuellen Pixels gebildet wird.

11. Optisches System für am Kopf tragbare Vorrichtungen nach Anspruch 8 oder 10, ferner aufweisend:
einen sechsten Lichtumlenker (230) zum Empfangen der Vielzahl von zweiten Lichtsignalen und zum Ändern der Richtung jedes der Vielzahl von zweiten Lichtsignalen,
wobei der vierte Lichtumlenker (210) die Vielzahl von zweiten Lichtsignalen empfängt und die Vielzahl von zweiten Lichtsignalen in Richtung zum sechsten Lichtumlenker (230) lenkt, der sechste Lichtumlenker (230) die vom vierten Lichtumlenker (210) empfangene Vielzahl von zweiten Lichtsignalen in Richtung zum fünften Lichtumlenker (220) lenkt und der fünfte Lichtumlenker (220) die vom sechsten Lichtumlenker (230) empfangene Vielzahl von zweiten Lichtsignalen in Richtung zum anderen Auge des Betrachters lenkt,
wobei der sechste Lichtumlenker (230) in der Nähe eines ersten Brennpunkts des vierten Lichtumlenkers (210) und eines ersten Brennpunkts des fünften Lichtumlenkers (220) angeordnet ist.

12. Anzeigesystem für am Kopf tragbare Vorrichtungen nach Anspruch 1, wobei der Bildrahmen im Wesentlichen ein Viereck mit einer ersten Seite, einer zweiten Seite, einer dritten Seite und einer vierten Seite ist, wobei die erste Seite und die dritte Seite aus der gleichen Anzahl von Lichtsignalen bestehen, die zweite und die vierte Seite aus der gleichen Anzahl von Lichtsignalen bestehen, wobei das Verhältnis der Länge der ersten Seite zur Länge der dritten Seite 0,95 - 1,05 beträgt, und/oder wobei der kleinste Abstand vom zweiten Lichtumlenker (120) zum Auge des Betrachters zwischen 15 mm und 30 mm beträgt.

## Revendications

1. Système optique destiné à des dispositifs à porter sur la tête, comprenant :
un premier photoémetteur (100) destiné à émettre une pluralité de premiers signaux lumineux, le premier photoémetteur (100) faisant varier une direction de projection entre une première limite de dimension spatiale et une seconde limite de dimension spatiale dans une première dimension ; et
un premier dispositif de redirection de la lumière (110) et un deuxième dispositif de redirection de la lumière (120) destinés à recevoir la pluralité de premiers signaux lumineux et à changer une direction de chacun de la pluralité de premiers signaux lumineux ; et
un troisième dispositif de redirection de la lumière (130) situé à proximité d'un premier foyer du premier dispositif de redirection de la lumière (110) et d'un premier foyer du deuxième dispositif de redirection de la lumière (120), le troisième dispositif de redirection de la lumière (130) étant un miroir de réflexion, dans lequel
le premier dispositif de redirection de la lumière (110) reçoit la pluralité de premiers signaux lumineux et dirige la pluralité de premiers signaux lumineux vers le troisième dispositif de redirection de la lumière (130), le troisième dispositif de redirection de la lumière (130) dirige la pluralité de premiers signaux lumineux reçus depuis le premier dispositif de redirection de la lumière (110) vers le deuxième dispositif de redirection de la lumière (120), le deuxième dispositif de redirection de la lumière (120) dirige la pluralité de premiers signaux lumineux reçus depuis le troisième dispositif de redirection de la lumière (130) vers un œil d'un observateur, de sorte que l'observateur perçoit un premier cadre d'image composé de la pluralité de premiers signaux lumineux,
le premier foyer du premier dispositif de redirection de la lumière (110) et le premier foyer du deuxième dispositif de redirection de la lumière (120) sont au niveau d'un même emplacement spatial, le premier dispositif de redirection de la lumière (110) reçoit la pluralité de premiers signaux lumineux émis depuis le premier photoémetteur (100) et dirige tous les premiers signaux lumineux vers le premier foyer du premier dispositif de redirection de la lumière (110) où la pluralité de premiers signaux lumineux ayant des chemins optiques différents est focalisée au niveau d'un même emplacement spatial, et
une géométrie du premier dispositif de redirection de la lumière (110) est conçue de telle sorte qu'un signal lumineux émis par le premier photoémetteur (100) à proximité de la première limite de dimension spatiale a une longueur totale de chemin optique depuis le premier photoémetteur (100) jusqu'à l'œil de l'observateur essentiellement égale à une longueur totale de chemin optique d'un autre signal lumineux émis par le premier photoémetteur (100) à proximité de la seconde limite de dimension spatiale depuis le premier photoémetteur (100) jusqu'à l'œil de l'observateur.

2. Système optique destiné à des dispositifs à porter sur la tête selon la revendication 1, dans lequel une longueur totale de chemin optique depuis le premier photoémetteur (100) jusqu'à l'œil de l'observateur d'un premier signal lumineux de la pluralité de premiers signaux lumineux n'étant pas émis à proximité de la première limite de dimension spatiale ou de la seconde limite de dimension spatiale est essentiellement égale à la longueur totale de chemin optique du signal lumineux émis par le premier photoémetteur (100) à proximité de la première limite de dimension spatiale et de la seconde limite de dimension spatiale, et/ou dans lequel le premier dispositif de redirection de la lumière (110) et le deuxième dispositif de redirection de la lumière (120) sont positionnés de telle sorte qu'un premier foyer du premier dispositif de redirection de la lumière (110) et un premier foyer du deuxième dispositif de redirection de la lumière (120) sont au niveau d'un même emplacement spatial.

3. Système optique destiné à des dispositifs à porter sur la tête selon la revendication 1, dans lequel le premier photoémetteur (100) est situé à proximité d'un second foyer du premier dispositif de redirection de la lumière (110), et/ou dans lequel l'œil de l'observateur est situé à proximité d'un second foyer du deuxième dispositif de redirection de la lumière (120), et/ou dans lequel le premier dispositif de redirection de la lumière (110) comprend deux foyers situés sur un même côté du premier dispositif de redirection de la lumière (110), et/ou dans lequel le deuxième dispositif de redirection de la lumière (120) comprend deux foyers situés sur un même côté du deuxième dispositif de redirection de la lumière (120).

4. Système optique destiné à des dispositifs à porter sur la tête selon la revendication 1, dans lequel un angle de convergence de la pluralité des premiers signaux lumineux lorsqu'ils rayonnent depuis le deuxième dispositif de redirection de la lumière (120) jusqu'à l'œil de l'observateur est corrélé à un champ de vision du premier cadre d'image jusqu'à l'œil de l'observateur, et dans lequel de préférence le champ de vision du premier cadre d'image perçu par l'œil de l'observateur est modifié par l'un quelconque des procédés qui incluent le changement d'une orientation du deuxième dispositif de redirection de la lumière (120) par rapport à l'œil de l'observateur, le changement d'un angle de réflexion du troisième dispositif de redirection de la lumière (130), et le changement d'une courbure du troisième dispositif de redirection de la lumière (130).

5. Système optique destiné à des dispositifs à porter sur la tête selon la revendication 1, dans lequel la géométrie du premier dispositif de redirection de la lumière (110) inclut une courbure d'une surface du premier dispositif de redirection de la lumière (110), et un emplacement du premier foyer du premier dispositif de redirection de la lumière (110) et un emplacement d'un second foyer du premier dispositif de redirection de la lumière (110), et/ou dans lequel une surface destinée à recevoir la pluralité de premiers signaux lumineux du premier dispositif de redirection de la lumière (110) ou une surface destinée à recevoir la pluralité de premiers signaux lumineux du deuxième dispositif de redirection de la lumière (120) est une courbe elliptique, et/ou dans lequel une surface destinée à recevoir la pluralité de premiers signaux lumineux du premier dispositif de redirection de la lumière (110) ou une surface destinée à recevoir la pluralité de premiers signaux lumineux du deuxième dispositif de redirection de la lumière (120) est une courbe non sphérique ou une courbe de forme libre, et/ou dans lequel le premier dispositif de redirection de la lumière (110) et le deuxième dispositif de redirection de lumière (120) sont formés de manière intégrale.

6. Système optique destiné à des dispositifs à porter sur la tête selon la revendication 1, dans lequel le premier dispositif de redirection de la lumière (110) ou le deuxième dispositif de redirection de la lumière (120) est au moins partiellement perméable à ce que la lumière de l'environnement pénètre dans l'œil de l'observateur.

7. Système optique destiné à des dispositifs à porter sur la tête selon la revendication 1, dans lequel le premier dispositif de redirection de la lumière (110) reçoit la pluralité de premiers signaux lumineux et dirige la pluralité de premiers signaux lumineux vers le deuxième dispositif de redirection de la lumière (120) de telle sorte que la pluralité de premiers signaux lumineux est dirigée vers une rétine de l'observateur et une première image virtuelle dans le premier cadre d'image composé de la pluralité de premiers signaux lumineux est perçue par l'observateur comme étant sur un côté du deuxième dispositif de redirection de la lumière (120) opposé à un côté où l'œil de l'observateur est situé.

8. Système optique pour des dispositifs à porter sur la tête selon la revendication précédente, comprenant en outre :
un second photoémetteur (200) destiné à émettre une pluralité de seconds signaux lumineux ;
un quatrième dispositif de redirection de la lumière (210), et un cinquième dispositif de redirection de la lumière (220) destinés à recevoir la pluralité de seconds signaux lumineux et à changer une direction de chacun de la pluralité de seconds signaux lumineux ;
dans lequel le quatrième dispositif de redirection de la lumière (210) reçoit la pluralité de seconds signaux lumineux et dirige la pluralité de seconds signaux lumineux vers le cinquième dispositif de redirection de la lumière (220), le cinquième dispositif de redirection de la lumière (220) dirige la pluralité de seconds signaux lumineux reçus depuis le quatrième dispositif de redirection de la lumière (210) vers un autre œil de l'observateur de telle sorte que la pluralité de seconds signaux lumineux est dirigée vers une autre rétine de l'observateur et une seconde image virtuelle depuis un second cadre d'image composé de la pluralité de seconds signaux lumineux est perçue par l'observateur comme étant sur un côté du cinquième dispositif de redirection de la lumière (220) opposé à un côté où l'autre œil de l'observateur est situé,
dans lequel l'observateur perçoit une image virtuelle binoculaire formée par la fusion de la première image virtuelle et de la seconde image virtuelle, dans lequel un emplacement de l'image virtuelle binoculaire est déterminé par les intersections entre un chemin optique de la pluralité de premiers signaux lumineux s'étendant depuis l'œil de l'observateur jusqu'à vers le deuxième dispositif de redirection de la lumière (120) et un chemin optique de la pluralité correspondante de seconds signaux lumineux s'étendant depuis l'autre œil de l'observateur jusqu'au cinquième dispositif de redirection de la lumière (220), une perception de profondeur de l'image virtuelle binoculaire est déterminée au moins en partie par un angle de convergence formé entre les chemins optiques de la pluralité de premiers signaux lumineux et les chemins optiques de la pluralité de seconds signaux lumineux.

9. Système optique destiné à des dispositifs à porter sur la tête selon la revendication 1, dans lequel le premier dispositif de redirection de la lumière (110) reçoit la pluralité de premiers signaux lumineux et dirige la pluralité de premiers signaux lumineux vers le deuxième dispositif de reidrection de la lumière (120) de telle sorte que la pluralité de premiers signaux lumineux est dirigée vers une rétine de l'observateur et une pluralité de premiers pixels virtuels est formée sur un côté du deuxième dispositif de redirection de la lumière (120) opposé à un côté où l'œil de l'observateur est situé.

10. Système optique pour des dispositifs à porter sur la tête selon la revendication précédente, comprenant en outre :
un second photoémetteur (200) destiné à émettre une pluralité de seconds signaux lumineux ; et
un quatrième dispositif de redirection de la lumière (210), et un cinquième dispositif de redirection de la lumière (220) destinés à recevoir la pluralité de seconds signaux lumineux et à changer une direction de chacun de la pluralité de seconds signaux lumineux ;
dans lequel le quatrième dispositif de redirection de la lumière (210) reçoit la pluralité de seconds signaux lumineux et dirige la pluralité de seconds signaux lumineux vers le cinquième dispositif de redirection de la lumière (220), le cinquième dispositif de redirection de la lumière (220) dirige la pluralité de seconds signaux lumineux reçus depuis le quatrième dispositif de redirection de la lumière (210) vers un autre œil de l'observateur de telle sorte que la pluralité de seconds signaux lumineux est projetée vers une autre rétine de l'observateur et une pluralité de seconds pixels virtuels depuis un second cadre d'images est formée sur un côté du cinquième dispositif de redirection de la lumière (220) opposé à un côté ou l'autre œil de l'observateur est situé,
dans lequel l'observateur perçoit un pixel virtuel binoculaire par fusion de l'un de la pluralité de premiers pixels virtuels et d'un second pixel virtuel correspondant depuis la pluralité des seconds pixels virtuels,
dans lequel un emplacement du pixel virtuel binoculaire est déterminé par une intersection entre un chemin optique de l'un de la pluralité de premiers pixels virtuels s'étendant depuis l'œil de l'observateur jusqu'au deuxième dispositif de redirection de la lumière (120) et un chemin optique du second pixel virtuel correspondant s'étendant depuis l'autre œil de l'observateur jusqu'au cinquième dispositif de redirection de la lumière (220), une perception de la profondeur du pixel virtuel binoculaire est déterminée par un angle de convergence formé entre les chemins optiques de l'un de la pluralité de premiers pixels virtuels s'étendant depuis l'œil de l'observateur jusqu'au deuxième dispositif de redirection de la lumière (120) et le chemin optique du second pixel virtuel correspondant.

11. Système optique pour des dispositifs à porter sur la tête selon les revendications 8 ou 10, comprenant en outre :
un sixième dispositif de redirection de la lumière (230) destiné à recevoir la pluralité de seconds signaux lumineux et à changer une direction de chacun de la pluralité de seconds signaux lumineux ;
dans lequel le quatrième dispositif de redirection de la lumière (210) reçoit la pluralité de seconds signaux lumineux et dirige la pluralité de seconds signaux lumineux vers le sixième dispositif de redirection de la lumière (230), le sixième dispositif de redirection de la lumière (230) dirige la pluralité de seconds signaux lumineux reçus depuis le quatrième dispositif de redirection de la lumière (210) vers le cinquième dispositif de redirection de la lumière (220), le cinquième dispositif de redirection de la lumière (220) dirige la pluralité de seconds signaux lumineux reçus depuis le sixième dispositif de redirection de la lumière (230) vers l'autre œil de l'observateur,
dans lequel le sixième dispositif de redirection de la lumière (230) est situé à proximité d'un premier foyer du quatrième dispositif de redirection de la lumière (210) et d'un premier foyer du cinquième dispositif de redirection de la lumière (220).

12. Système d'affichage pour des dispositifs à porter sur la tête selon la revendication 1, dans lequel le cadre d'images est essentiellement un quadrilatère ayant un premier côté, un deuxième côté, un troisième côté et un quatrième côté, le premier côté et le troisième côté sont constitués d'un même nombre de signaux lumineux, le deuxième et le quatrième côté sont constitués d'un même nombre de signaux lumineux, dans lequel un rapport d'une longueur du premier côté à une longueur du troisième côté est de 0,95 à 1,05, et/ou dans lequel une distance la plus proche depuis le deuxième dispositif de redirection de la lumière (120) jusqu'à l'œil de l'observateur est de 15 mm à 30 mm.
